# FASCICULE DE BREVET EUROPEEN

(11) **EP 0 905 370 B1**
(45) Date de publication et mention de la délivrance du brevet: **29.01.2003**
(21) Numéro de dépôt: 98402331.7
(22) Date de dépôt: 23.09.1998
(51) Int. Cl.: F02M 37/22

(54) **Dispositif de pompage pour réservoir de pompage de gasoil sur véhicule automobile**
Pumpvorrichtung für Dieselbrennstofftank eines Kraftfahrzeuges
Pumping device for diesel fuel tank in an automotive vehicle

(30) Priorité: 25.09.1997 FR 9711949
(43) Date de publication de la demande: 31.03.1999
(73) Titulaire: MARWAL SYSTEMS, 51000 Chalons en Champagne (FR)
(72) Inventeur: Flambert, William, 41260 La Chaussee Saint-Victor (FR)
(74) Mandataire: Texier, Christian

(56) Documents cités:
- FR-A- 2 594 708
- US-A- 4 512 882
- US-A- 4 515 690
- US-A- 4 539 108
- US-A- 5 120 434
- PATENT ABSTRACTS OF JAPAN vol. 8, no. 154 (M-310), 18 juillet 1984 & JP 59 051154 A (TOYOTA), 24 mars 1984
- PATENT ABSTRACTS OF JAPAN vol. 11, no. 333 (M-637), 30 octobre 1987 & JP 62 113861 A (NIPPON DENSO), 25 mai 1987
- PATENT ABSTRACTS OF JAPAN vol. 8, no. 227 (M-332) [1664], 18 octobre 1984 & JP 59 108859 A (ISUZU), 23 juin 1984

## Description

La présente invention concerne le domaine des dispositifs de pompage pour carburant dans un réservoir de véhicule automobile.

Plus précisément encore la présente invention concerne le domaine des dispositifs de pompage pour gasoil ou "gazole".

On a déjà proposé de nombreux dispositifs de pompage à cet effet.

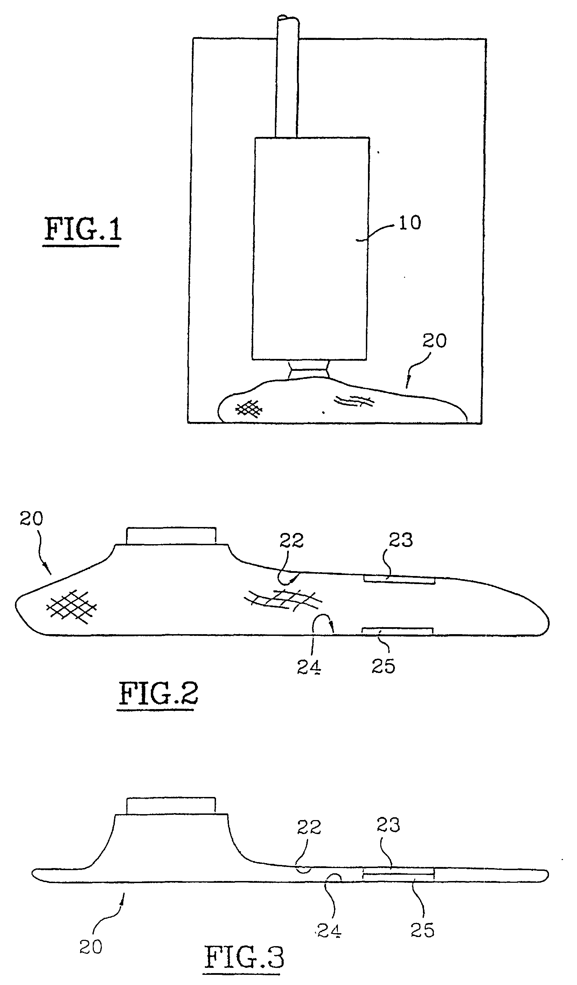

La plupart des dispositifs de pompage ainsi proposés comprennent, comme schématisé sur la figure 1 annexée, une pompe électrique 10 dont l'entrée est munie d'un filtre ou "crépine" 20. Le filtre 20 a pour fonction de protéger la pompe 10 d'une contamination susceptible de la bloquer ou de provoquer d'autres dommages. De manière typique, mais non limitative, le filtre 20 à une dimension de maille de l'ordre de 70µm. L'entrée de la pompe 10 et la crépine peuvent être situées directement dans le réservoir de carburant principal, à proximité du fond de celui-ci, ou dans une réserve placée elle-même à proximité du fond du réservoir principal et alimentée par exemple par un étage de sortie de la pompe ou par le retour de carburant non utilisé par le moteur.

On sait que en dessous d'une certaine température le gasoil a tendance à produire des particules de paraffine.

Ainsi, par temps froid, au moins au démarrage, le gasoil peut colmater le filtre 20 par paraffinage, interdisant l'alimentation de la pompe 10 et par conséquent paralysant le véhicule.

Pour essayer d'éliminer cet inconvénient majeur il a été proposé d'augmenter les mailles du filtre 20, pour limiter les risques de colmatage, par exemple en utilisant un filtre 20 ayant des mailles de dimension moyenne de l'ordre de 200µm. Néanmoins cette proposition ne donne pas toujours satisfaction, la pompe 10 n'étant pas complètement protégée avec un tel filtre à grosses mailles.

Ainsi de nos jours la majorité des systèmes d'alimentation de carburant utilisant du gasoil sont équipés d'un moyen apte à réchauffer le gasoil pour éviter de colmater le filtre fin protégeant la pompe haute pression.

Cependant la mise en pratique de ce concept pose des difficultés. Celles-ci sont dues notamment au fait que la composition des gasoils proposés aux utilisateurs peut varier d'un fournisseur à l'autre et surtout d'un pays à l'autre, les exigences en matière d'additifs et/ou de raffinement n'ayant pas encore fait l'objet d'une norme internationale.

De ce fait la température de consigne à laquelle il est souhaitable de mettre en service le moyen de chauffage précité peut dépendre de la composition du gasoil contenu dans le réservoir, plus fréquemment du pays dans lequel le réservoir a été rempli. Cette température est par exemple typiquement de l'ordre de -30 à -40°C en Suède et de l'ordre de 0°C en Afrique.

On a certes déjà tenté de résoudre ce problème en proposant un thermostat réglable pour déclencher le moyen de chauffage.

Cependant cette solution ne donne pas totalement satisfaction. En effet d'une part le réglage d'un tel thermostat s'avère difficile à opérer. D'autre part et surtout, cette solution demande en théorie que le thermostat fasse l'objet d'un nouveau réglage à chaque changement de composition du gasoil introduit dans le réservoir.

On a également tenté de proposer des systèmes conçus pour détecter la pression en aval du filtre et opérer automatiquement la mise en service de moyens de chauffage quand un colmatage du filtre est ainsi détecté. On pourra par exemple se référer aux documents FR-A-2594708 et US-A-4539108. Cependant les moyens jusqu'ici proposés à cet effet ne donnent pas totalement satisfaction en raison de leur complexité.

La présente invention a maintenant pour but de proposer de nouveaux moyens permettant d'améliorer la mise en service du moyen de chauffage précité.

Ce but est atteint dans le cadre de la présente invention grâce à un dispositif de pompage pour gasoil comprenant une pompe, un filtre placé sur l'entrée de la pompe, des moyens de chauffage du gasoil, et des moyens de détection de la différence de pression entre le circuit amont et le circuit aval du filtre, lesquels moyens de détection sont adaptés pour mettre l'élément de chauffage en service lorsque cette différence de pression dépasse un seuil en raison d'un colmatage du filtre par paraffinage, caractérisé par le fait que le filtre présente une élasticité contrôlée pour autoriser une déformation, en cas de colmatage, assurant une mise en contact de deux surfaces de sa paroi interne, normalement séparées en fonctionnement normal non colmaté, et ces deux surfaces de paroi interne sont munies de contacts électriques, ainsi susceptibles d'être reliés en cas de colmatage du filtre, lesquels contacts sont reliés à des moyens de mise en service du moyen de chauffage.

Comme on le précisera par la suite la présente invention peut s'appliquer à la fois aux systèmes d'alimentation de carburant dans lesquels la pompe et/ou le filtre sont situés dans le réservoir, et aux systèmes d'alimentation de carburant dans lesquels la pompe et/ou le filtre sont situés en ligne à l'extérieur du réservoir.

La présente invention concerne également les réservoirs de carburant ainsi équipés.

D'autres caractéristiques, buts et avantages de la présente invention apparaîtront à la lecture de la description détaillée qui va suivre, et en regard des dessins annexés, donnés à titre d'exemple non limitatif, et sur lesquels
- la figure 1 précédemment décrite représente une vue schématique d'un ensemble de pompage classique, conforme à l'état de la technique,
- la figure 2 représente une vue schématique en coupe verticale d'un filtre conforme à la présente invention, en fonctionnement normal non colmaté,
- la figure 3 représente une vue schématique similaire en coupe vertical du même filtre en état colmaté, et
- la figure 4 illustre un exemple d'implantation d'un système conforme à la présente invention.

La structure générale de l'ensemble de pompage conforme à la présente invention, notamment la structure de réservoir, réserve éventuelle, pompe et filtre, est classique en soi et ne sera donc pas décrite dans le détail par la suite.

On s'attachera donc par la suite uniquement à décrire les caractéristiques spécifiques à l'invention.

Plus précisément dans un premier temps on va décrire, en regard des figures 2 et 3, un mode de réalisation particulier dans lequel la détection de colmatage est faite directement sur une crépine disposée en entrée d'une pompe au fond d'un réservoir de carburant.

Selon ce mode de réalisation, le filtre 20 est formé d'une poche reliée par une ouverture avec l'entrée de la pompe. Il présente une élasticité contrôlée pour autoriser une déformation, en cas de colmatage, assurant une mise en contact de deux surfaces de sa paroi interne, normalement séparées en fonctionnement normal non colmaté.

Pour celà le filtre 20 peut être réalisé en tout matériau approprié, tel que par exemple en métal ou de préférence en matière plastique.

Sur les figures 2 et 3 annexées les portions de surface de la paroi interne, impliquées, sont référencées 22 et 24.

Plus précisément ces portions de surface 22 et 24 sont illustrées sous forme de portions de surface généralement horizontales, respectivement supérieure et inférieure, sur les figures 2 et 3.

Cependant cette illustration ne doit pas être considérée comme limitative, la localisation des portions de surface 22, 24 et leur géométrie, étant susceptibles de nombreuses variantes de réalisation.

En second lieu dans le cadre de ce mode de réalisation de la présente invention, ces deux surfaces de paroi interne 22 et 24 sont munies de contacts électriques respectifs 23 et 25 susceptibles d'être reliés en cas de colmatage du filtre, c'est à dire en cas d'affaissement du filtre 20 sous l'effet de la dépression créée à l'intérieur du filtre 20 par l'aspiration de la pompe 10, en cas de colmatage dudit filtre 20.

Les contacts 23 et 25 sont reliés à des moyens de mise en service du moyen de chauffage précité. Pour celà on peut prévoir par exemple de disposer directement les contacts 23 et 25 en série avec une source d'alimentation électrique (la batterie du véhicule généralement) et le moyen de chauffage. Les contacts 23 et 25 se comportent en effet comme un interrupteur ouvert en fonctionnement normal non colmaté du filtre et fermé en cas de colmatage du filtre, notamment en cas de colmatage par un gasoil froid nécessitant un réchauffage.

L'élément de chauffage est placé en amont ou près de la crépine 20 pour préchauffer le gasoil avant que celui-ci pénètre dans la crépine 20, empêchant ainsi un paraffinage du filtre 20.

L'élasticité du filtre 20 peut être suffisante pour assurer la séparation des contacts 23 et 25 lorsque le gasoil a atteint une température adéquate et que le colmatage du filtre 20 est ainsi supprimé. Cependant le cas échéant le filtre 20 peut être équipé d'un organe élastique additionnel assurant cette fonction de redéploiement du filtre à la fin du colmatage et ainsi de séparation des contacts 23 et 25.

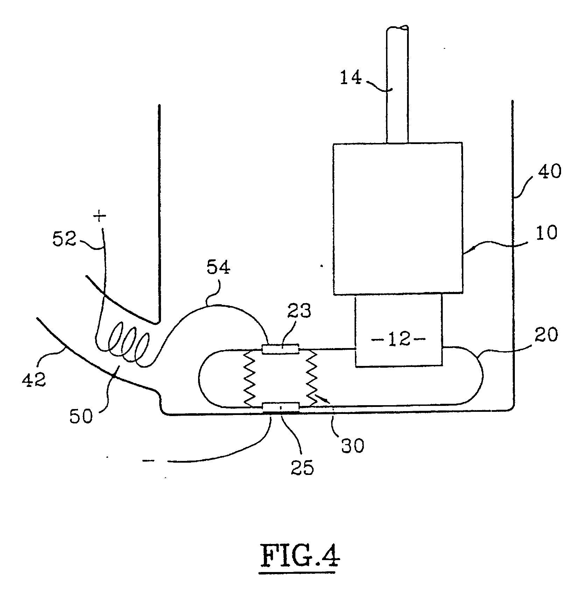

Un tel organe élastique est représenté sous la référence 30 sur la figure 4.

L'homme de l'art comprendra que la structure précédemment décrite permet d'assurer automatiquement les mises en service et hors service du moyen de chauffage lorsque cela est requis, indépendamment de la composition particulière du gasoil et/ou d'une température de consigne imposée ou réglée à la demande.

Dans le cadre de la présente invention, les contacts 23 et 25 sont des contacts frottants autodénudants afin de garantir une liaison électrique satisfaisante même en cas de mise en contact très occasionnelle et ce sans risque de perturbation par des résidus polluants éventuellement accumulés dans le filtre 20 ou encore par une oxydation des contacts 23 et 25.

On a illustré sur la figure 4 une implantation préférentielle d'un tel système dans un réservoir de carburant 40.

On retrouve sur cette figure 4 une pompe 10 dont la sortie est référencée 14, munie à son entrée 12 d'une crépine 20 équipée de contacts électriques 23, 25 et d'un organe élastique interne 30.

Sur la figure 4 l'élément chauffant est référencé 50. Celui-ci est placé dans le canal 42 de remplissage du réservoir 40 ou près de ce canal 42.

Une première borne 52 de l'élément chauffant 50 est reliée à une borne d'alimentation positive. La seconde borne 54 de l'élément chauffant 50 est reliée au contact 23. L'autre contact 25 est relié à une borne de masse.

Bien entendu la présente invention n'est pas limitée au mode de réalisation qui vient d'être décrit, mais s'étend à toute variante conforme à son esprit.

## Revendications

1. Dispositif de pompage pour réservoir de gasoil sur véhicule automobile comprenant une pompe (10), un filtre (20) placé sur l'entrée de la pompe (10), des moyens de chauffage du gasoil, et des moyens (23, 25; 60) de détection de la différence de pression entre le circuit amont (64) et le circuit aval (65) du filtre (20), lesquels moyens de détection (23, 25; 60) sont adaptés pour mettre l'élément de chauffage (50) en service lorsque cette différence de pression dépasse un seuil en raison d'un colmatage du filtre (20) par paraffinage, **caractérisé par le fait que** le filtre (20) a la forme d'une poche qui présente une élasticité contrôlée pour autoriser une déformation, en cas de colmatage, assurant une mise en contact de deux surfaces (22, 24) de sa paroi interne, normalement séparées en fonctionnement normal non colmaté, et que ces deux surfaces de paroi interne (22, 24) sont munies de contacts électriques respectifs (23, 25), ainsi susceptibles d'être reliés en cas de colmatage du filtre (20), lesquels contacts (23, 25) sont reliés à des moyens de mise en service du moyen de chauffage.

2. Dispositif selon la revendication 1, **caractérisé par le fait que** la pompe (10) est placée à l'intérieur du réservoir de carburant.

3. Dispositif selon la revendication 1, **caractérisé par le fait que** la pompe (10) est placée à l'extérieur du réservoir de carburant.

4. Dispositif selon l'une des revendications 1 à 3, **caractérisé par le fait que** le filtre (20) est placé à l'intérieur du réservoir de carburant.

5. Dispositif selon l'une des revendications 1 à 3, **caractérisé par le fait que** le filtre (20) est placé à l'extérieur du réservoir de carburant.

6. Dispositif selon l'une des revendications 1 à 5, **caractérisé par le fait que** le filtre (20) est réalisé en matière plastique.

7. Dispositif selon l'une des revendications 1 à 6, **caractérisé par le fait que** l'élasticité du filtre (20) est adaptée pour assurer la séparation des contacts (23, 25) lorsque le gasoil a atteint une température adéquate et que le colmatage du filtre (20) est ainsi supprimé.

8. Dispositif selon l'une des revendications 1 à 6, **caractérisé par le fait que** le filtre (20) est équipé d'un organe élastique additionnel (30) assurant un redéploiement du filtre à la fin du colmatage et ainsi de séparation des contacts (23, 25).

9. Dispositif selon l'une des revendications 1 à 8, **caractérisé par le fait que** lesdites surfaces (22, 24) de la paroi interne du filtre (20) sont des portions de surface généralement horizontales, respectivement supérieure et inférieure.

10. Dispositif selon l'une des revendications 1 à 9, **caractérisé par le fait que** les contacts (23, 25) des moyens de détection sont reliés en série avec une source d'alimentation électrique et le moyen de chauffage (50).

11. Dispositif selon l'une des revendications 1 à 10, **caractérisé par le fait que** les contacts (23, 25) des moyens de détection sont des contacts frottants autodénudants.

12. Réservoir de gasoil pour véhicule automobile, **caractérisé par le fait qu'**il comporte un dispositif de pompage conforme à l'une des revendications 1 à 11.

## Claims

1. A pump device for a motor vehicle diesel tank, the device comprising a pump (10), a filter (20) placed at the inlet to the pump (10), diesel heater means, and means (23, 25; 60) for detecting the pressure difference between the circuits upstream (64) and downstream (65) of the filter (20), which detector means (23, 25; 60) are adapted to put the heater element (50) into operation when said pressure difference exceeds a threshold because of the filter (20) becoming clogged by paraffin, the device being **characterized by** the facts that the filter (20) is in the form of a bag presenting controlled elasticity to allow it to deform in the event of clogging in such a manner as to bring two surfaces (22, 24) of its inside wall that are normally separated in normal non-clogged operation into contact with each other, and that the two surfaces of the inside wall (22, 24) are provided with respective electrical contacts (23, 25) that are thus suitable for being put into connection with each other in the event of the filter (20) being clogged, which contacts (23, 25) are connected to means for putting the heater means into operation.

2. A device according to claim 1, **characterized by** the fact that the pump (10) is placed inside the fuel tank.

3. A device according to claim 1, **characterized by** the fact that the pump (10) is placed outside the fuel tank.

4. A device according to any one of claims 1 to 3, **characterized by** the fact that the filter (20) is placed inside the fuel tank.

5. A device according to any one of claims 1 to 3, **characterized by** the fact that the filter (20) is placed outside the fuel tank.

6. A device according to any one of claims 1 to 5, **characterized by** the fact that the filter (20) is made of plastics material.

7. A device according to any one of claims 1 to 6, **characterized by** the fact that the elasticity of the filter (20) is adapted to separate the contacts (23, 25) when the diesel has reached a suitable temperature and the clogging of the filter (20) has thus been eliminated.

8. A device according to any one of claims 1 to 6, **characterized by** the fact that the filter (20) is fitted with an additional resilient member (30) for redeploying the filter at the end of clogging and thus separating the contacts (23, 25).

9. A device according to any one of claims 1 to 8, **characterized by** the fact that said surfaces (22, 24) of the inside wall of the filter (20) are generally horizontal surface portions, respectively a top surface and a bottom surface.

10. A device according to any one of claims 1 to 9, **characterized by** the fact that the contacts (23, 25) of the detector means are connected in series with an electrical power supply and the heater means (50).

11. A device according to any one of claims 1 to 10, **characterized by** the fact that the contacts (23, 25) of the detector means are self-cleaning rubbing contacts.

12. A motor vehicle diesel tank, **characterized by** the fact that it includes a pump device in accordance with any one of claims 1 to 11.

## Patentansprüche

1. Pumpvorrichtung für einen Kraftfahrzeug-Dieselbrennstoffbehälter, die eine Pumpe (10), einen Filter (20), der am Eingang der Pumpe (10) angeordnet ist, Mittel zum Beheizen des Dieselbrennstoffs und Mittel (23, 25; 60) zur Erfassung des Druckunterschieds zwischen dem Kreis stromaufwärts (64) und dem Kreis stromabwärts (65) des Filters (20) umfasst, wobei die Mittel zur Erfassung (23, 25; 60) eingerichtet sind, das Heizelement (50) in Betrieb zu setzen, wenn diese Druckdifferenz wegen einer Verstopfung des Filters (20) durch Paraffinierung eine Schwelle überschreitet, **dadurch gekennzeichnet, dass** der Filler (20) die Form einer Tasche hat, die eine kontrollierte Elastizität darstellt, um im Fall von Verstopfung eine Deformation zuzulassen, die ein Inkontaktbringen von zwei Oberflächen (22, 24) seiner Innenwand (22, 24) sicherstellt, welche normalerweise bei normalem nicht verstopftem Funktionieren separiert sind, und dass diese zwei Oberflächen der Innenwand (22, 24) mit respektiven elektrischen Kontakten (23, 25) versehen sind, die dazu geeignet sind, dass sie im Fall von Verstopfung des Filters (20) verbunden werden, wobei die Kontakte (23, 25) mit Mitteln zur Inbetriebsetzung des Heizmittels verbunden sind.

2. Vorrichtung nach Anspruch 1, **dadurch gekennzeichnet, dass** die Pumpe (10) innerhalb des Brennstoffbehälters angeordnet ist.

3. Vorrichtung nach Anspruch 1, **dadurch gekennzeichnet, dass** die Pumpe (10) außerhalb des Brennstoffbehälters angeordnet ist.

4. Vorrichtung nach einem der Ansprüche 1 bis 3, **dadurch gekennzeichnet, dass** der Filter (20) innerhalb des Brennstoffbehälters angeordnet ist.

5. Vorrichtung nach einem der Ansprüche 1 bis 3, **dadurch gekennzeichnet, dass** der Filter (20) außerhalb des Brennstoffbehälters angeordnet ist.

6. Vorrichtung nach einem der Ansprüche 1 bis 5, **dadurch gekennzeichnet, dass** der Filter (20) aus Kunststoffmaterial hergestellt ist.

7. Vorrichtung nach einem der Ansprüche 1 bis 6, **dadurch gekennzeichnet, dass** die Elastizität des Filters (20) eingerichtet ist, die Trennung der Kontakte (23, 25) sicherzustellen, wenn der Dieselbrennstoff eine entsprechende Temperatur erreicht hat, und dass die Verstopfung des Filters (20) auf diese Art unterdrückt wird.

8. Vorrichtung nach einem der Ansprüche 1 bis 6, **dadurch gekennzeichnet, dass** der Filter (20) mit einem zusätzlichen elastischen Organ (30) ausgestattet ist, das eine Wiederausstreckung des Filters am Ende der Verstopfung und somit die Trennung der Kontakte (23, 25) sicherstellt.

9. Vorrichtung nach einem der Ansprüche 1 bis 8, **dadurch gekennzeichnet, dass** die Oberflächen (22, 24) der Innenwand des Filters (20) Teile mit im wesentlichen horizontaler oberer bzw. unterer Fläche sind.

10. Vorrichtung nach einem der Ansprüche 1 bis 9, **dadurch gekennzeichnet, dass** die Kontakte (23, 25) der Mittel zur Erfassung in Serie mit einer elektrischen Stromquelle und dem Heizmittel (50) verbunden sind.

11. Vorrichtung nach einem der Ansprüche 1 bis 10, **dadurch gekennzeichnet, dass** die Kontakte (23, 25) der Mittel zur Erfassung selbstreinigende Reibekontakte sind.

12. Dieselbrennstofftank für ein Kraftfahrzeug, **dadurch gekennzeichnet, dass** er eine Pumpvorrichtung nach einem der Ansprüche 1 bis 11 aufweist.
